# EUROPEAN PATENT APPLICATION

(11) **EP 2 634 931 A1**
(43) Date of publication of application: **04.09.2013**
(21) Application number: 11835781.3
(22) Date of filing: 07.10.2011
(51) Int. Cl.: H04B 7/15, H04W 16/26, H04W 56/00

(54) **WIRELESS COMMUNICATION DEVICE AND WIRELESS COMMUNICATION METHOD**

(30) Priority: 27.10.2010 JP 2010240462
(71) Applicant: Panasonic Corporation, Osaka 571-8501 (JP)
(72) Inventor: YAMAMOTO, Masahiro, Osaka 540-6207 (JP); HORIIKE, Yoshio, Osaka 540-6207 (JP); WATANABE, Takashi, Osaka 540-6207 (JP)
(74) Representative: Grünecker, Kinkeldey, Stockmair & Schwanhäusser
(86) International application number: PCT/JP2011/005652
(87) International publication number: WO 2012/056633

(57) **Abstract**

There is provided a wireless communication apparatus for conducting communication between a high-order apparatus and a low-order apparatus, including a beacon reception unit and a beacon transmission unit. The beacon reception unit receives a first regular beacon signal (351) transmitted from the high-order apparatus. The beacon transmission unit transmits a second regular beacon signal (351) synchronizing a clock of the low-order apparatus to the low-order apparatus in a case where the beacon reception unit receives the first regular beacon signal (351). The beacon transmission unit transmits a temporary beacon signal (352) indicating that the clock of a local station is not able to be synchronized with a clock of the high-order apparatus, to the low-order apparatus, in a case where the beacon reception unit is not able to receive the first regular beacon signal (351).

## Description

### TECHNICAL FIELD

The present invention relates to a wireless communication system that includes a wireless communication apparatus which transmits a beacon signal and a wireless communication apparatus which establishes clock synchronization by receiving the beacon signal. The present invention particularly relates to a wireless communication apparatus and a wireless communication method used in such a wireless communication system.

### BACKGROUND ART

In a wireless communication system having a battery-run slave wireless apparatus, the slave wireless apparatus generally awaits reception intermittently to suppress power consumption by the slave wireless apparatus. The wireless communication system called a synchronization type is present as the wireless communication system in which the slave wireless apparatus awaits reception intermittently.

In this system, a master wireless apparatus periodically transmits a beacon signal, and the slave wireless apparatus periodically receives the beacon signal and synchronizes a clock of the slave wireless apparatus with a clock of the master wireless apparatus. Then, the slave wireless apparatus awaits reception of polling data from the master wireless apparatus at a predetermined timing. This method is effective in saving electric power consumed in the slave wireless apparatus. In the wireless communication system of this synchronization type, in a case where direct communication is not able to be conducted between the master wireless apparatus and the slave wireless apparatus, a relay wireless apparatus which relay-transmits a wireless signal is used (refer to PTL 1).

In the technology disclosed in PTL 1, the relay wireless apparatus receives the beacon signal that the master wireless apparatus periodically transmits. The relay wireless apparatus, periodically transmits the beacon signal from the relay wireless apparatus immediately after that beacon signal from the patent wireless apparatus in synchronization with the beacon signal received from the master wireless apparatus. That is, the beacon signal from the relay wireless apparatus is transmitted immediately after the beacon signal from the master wireless apparatus.

The slave wireless apparatus periodically receives the beacon signal from the relay wireless apparatus, and synchronizes with the beacon signal from the relay wireless apparatus. The polling data from the master wireless apparatus is superimposed on the beacon signal from the master wireless apparatus. Then, the polling data from the master wireless apparatus is additionally superimposed on the beacon signal that is transmitted by the relay wireless apparatus. Thus, the slave wireless apparatus can receive the polling data from the master wireless apparatus by receiving the beacon signal that is transmitted by the relay wireless apparatus.

As described above, the polling data may be transmitted from the master wireless apparatus to the slave wireless apparatus without a long delay.

On the other hand, terminal information generated in the slave wireless apparatus, as terminal call data, is transmitted to the master wireless apparatus through the relay wireless apparatus as a relay course. The master wireless apparatus manages a transmission timing of the slave wireless apparatus, and the slave wireless apparatus transmits the terminal call data at the timing dictated by the master wireless apparatus.

In the same manner, the master wireless apparatus also manages the timing of the transmission from the relay wireless apparatus to the master wireless apparatus. The relay wireless apparatus relay-transmits the terminal call data at the timing dictated by the master wireless apparatus.

The master wireless apparatus divides a beacon transmission interval into plural slots, and assigns one of the plural slots to each of the slave wireless apparatus and the relay wireless apparatus. The slave wireless apparatus and the relay wireless apparatus perform transmission at their respective assigned slots.

Furthermore, a wireless local area network (LAN) system is known as an example of another synchronization type. This is a wireless communication system that is configured to include the master wireless apparatus that periodically transmits the beacon signal, and one or plural slave wireless apparatuses that establish clock synchronization with the master wireless apparatus by receiving the beacon signal (for example, refer to PTL 2).

According to the technology disclosed in PTL 2, a wireless access point (the master wireless apparatus), and a wireless communication terminal (the slave wireless apparatus), each having a built-in radio wave clock circuit, receives a standard radio wave that is transmitted from a standard radio wave transmission station to obtain clock data on the standard time.

The wireless access point transmits the beacon signal at a time interval of 100 ms, using time that is synchronized with the standard time, based on the obtained clock data on the standard time, as a reference. The wireless communication terminal establishes synchronization with time of the beacon signal transmitted by the wireless access point, based on the obtained data on the standard time and thus performs intermittent reception and receives the beacon signal.

According to this technology, also in a case where the plural access points are present, since all the wireless access points are synchronized with the standard time, they transmit the beacon signal at the same timing. In a case where the wireless communication terminal is moved out of an actual range of communication of a wireless access point A, the wireless communication terminal is not enabled to receive the beacon signal of the wireless access point A, but continues the intermittent reception at the intermittent reception timing that is synchronized with the standard time, as it is, without proceeding to a consecutive reception operation. Then, in a case where the wireless communication terminal enters the actual range of communication of another wireless access point B, the wireless communication terminal can receive the beacon signal of the wireless access point B because the wireless access point B transmits the beacon signal at the same timing as the wireless access point A.

In this manner, PTL 1 discloses the technology in which the master wireless apparatus, the relay wireless apparatus and the slave wireless apparatus establish synchronization, based on the beacon signal, in order to conduct communication. However, this does not disclose an operation that is performed in a case where the relay wireless apparatus is not able to receive the beacon signal from the master wireless apparatus.

Furthermore, PTL 2 discloses an operation that is performed in a case where the slave wireless apparatus is not able to receive the beacon signal from the master wireless apparatus. However, the technology disclosed in PTL 2 has the following problems and the limitations.
(1) Since both the master wireless apparatus and the slave wireless apparatus need to have a standard radio wave clock function, there is a problem in that an increase in size of a circuit leads to an increase in cost.
(2) Since it is assumed that the actual ranges of communication for the master wireless apparatuses are not overlapped on one another, there is a limitation that the master wireless apparatuses are arranged in such a manner that the beacon signals transmitted from the respective master wireless apparatuses do not interfere with one another.

As described above, in a case of using the technology in the related art, in the wireless communication system when another wireless communication system is present in the actual range of communication of the wireless communication system, synchronization deviation is easy to take place and reliability decreases.

### Citation List

### Patent Literature

PTL 1: Japanese Patent Unexamined Publication No. 2009-288897
PTL 2: Japanese Patent Unexamined Publication No. 2005-72677

### SUMMARY OF THE INVENTION

An object of the present invention is to provide a wireless communication apparatus and a wireless communication method for use in a wireless communication system, in which synchronization deviation is difficult to take place and which have high reliability.

According to the present invention, there is provided a wireless communication apparatus for conducting communication between a high-order apparatus and a low-order apparatus, including a beacon reception unit and a beacon transmission unit. The beacon reception unit receives a first regular beacon signal transmitted from the high-order apparatus. The beacon transmission unit transmits a second regular beacon signal synchronizing a clock of the low-order apparatus to the low-order apparatus in a case where the beacon reception unit receives the first regular beacon signal.

The beacon transmission unit transmits a temporary beacon signal indicating that the clock of the wireless communication apparatus is not able to be synchronized with a clock of the high-order apparatus, to the low-order apparatus, in a case where the beacon reception unit is not able to receive the first regular beacon signal.

According to the present invention, there is provided a wireless communication method of conducting communication between a high-order apparatus and a low-order apparatus, including a beacon reception step of receiving a first regular beacon signal transmitted from the high-order apparatus. The wireless communication method further includes a step of transmitting a second regular beacon signal synchronizing a clock of the low-order apparatus to the low-order apparatus in a case where the first regular beacon signal is received in the beacon reception step. The wireless communication method further includes a beacon transmission step of transmitting a temporary beacon signal indicating that the clock of the wireless communication apparatus is not able to be synchronized with a clock of the high-order apparatus, to the low-order apparatus, in a case where the first regular beacon signal is not able to be received in the beacon reception step.

### BRIEF DESCRIPTION OF DRAWINGS

[Fig. 1A] Fig. 1A is a block diagram illustrating a configuration of a master wireless apparatus according to an embodiment of the present invention.
[Fig. 1B] Fig. 1B is a block diagram illustrating a configuration of a relay wireless apparatus according to the embodiment of the present invention.
[Fig. 1C] Fig. 1C is a block diagram illustrating a configuration of a slave wireless apparatus according to the embodiment of the present invention.
[Fig. 2] Fig. 2 is a view illustrating a configuration of a wireless communication system according to the embodiment of the present invention.
[Fig. 3A] Fig. 3A is a view illustrating a configuration of a basic slot managed by the wireless communication system according to the embodiment of the present invention.
[Fig. 3B] Fig. 3B is a view illustrating configurations of link connection slots (L), among configurations of the basic slot managed by the wireless communication system according to the embodiment of the present invention.
[Fig. 4] Fig. 4 is a view illustrating a slot position relationship between the master wireless apparatus, the relay wireless apparatuses and the slave wireless apparatus according to the embodiment of the present invention.
[Fig. 5A] Fig. 5A is a view illustrating a message format of a link connection signal according to the embodiment of the present invention.
[Fig. 5B] Fig. 5B is a view illustrating a configuration of a repetition frame of the link connection signal according to the embodiment of the present invention.
[Fig. 6] Fig. 6 is a view illustrating a carrier sensing timing of the low-order apparatus that carrier-senses reception of the link connection signal that is transmitted from the high-order apparatus and the link connection signal that is transmitted from the high-order apparatus according to the embodiment of the present invention.
[Fig. 7A] Fig. 7A is a view illustrating a format of a data communication signal that is transmitted and received at a data communication slot (D), according to the embodiment of the present invention.
[Fig. 7B] Fig. 7B is a view illustrating a configuration of a layer 3 frame of the data communication signal that is transmitted and received at the data communication slot (D), according to the embodiment of the present invention.
[Fig. 8A] Fig. 8A is a view illustrating a configuration of route information according to the embodiment of the present invention.
[Fig. 8B] Fig. 8B is a view illustrating a bit configuration of slot position information according to the embodiment of the present invention.
[Fig. 8C] Fig. 8C is a view illustrating the bit configuration of the relay wireless apparatus information according to the embodiment of the present invention.

### DESCRIPTION OF EMBODIMENTS

An embodiment of the present invention is described below referring to the drawings. Moreover, the present invention is not limited by the embodiment.

### Embodiment

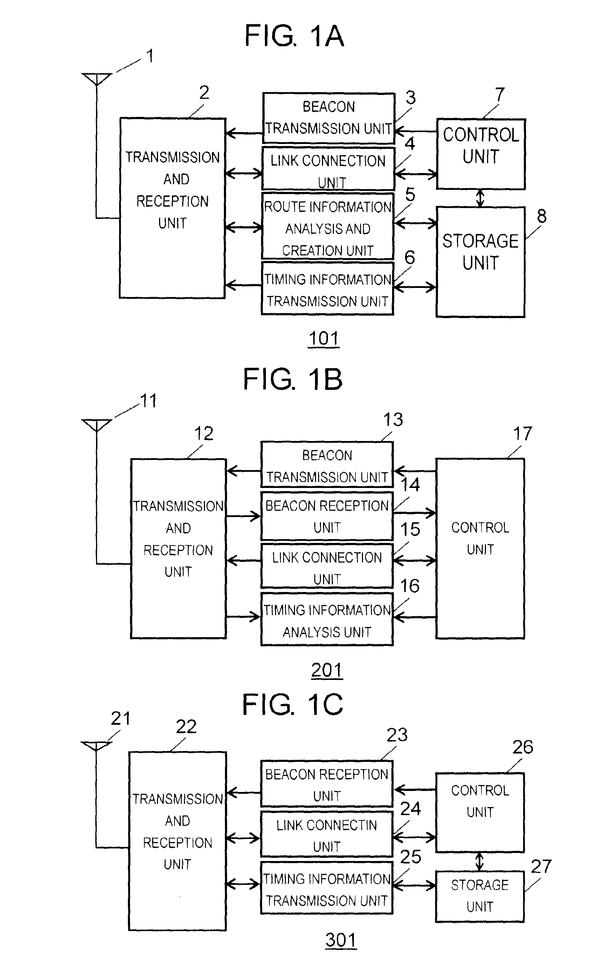

Fig. 1A is a block diagram illustrating a configuration of master wireless apparatus 101 according to the embodiment of the present invention. Fig. 1B is a block diagram illustrating a configuration of relay wireless apparatus 201 according to the embodiment. Fig. 1C is a block diagram illustrating a configuration of slave wireless apparatus 301 according to the embodiment.

First, an outline of the configuration of master wireless apparatus 101 is described.

As illustrated in Fig. 1A, master wireless apparatus 101 includes antenna 1, transmission and reception unit 2, beacon transmission unit 3, link connection unit 4, route information analysis and creation unit 5, control unit 7, timing information transmission unit 6 and storage unit 8.

Control unit 7 performs time management on entire master wireless apparatus 101 (wireless communication apparatus) and performs control on each unit. Furthermore, control unit 7 functions as a beacon signal creation unit and creates signal 353 for entry, along with a beacon signal (a signal including regular beacon signal 351 and temporary beacon signal 352) described below.

Transmission and reception unit 2 is configured from a wireless transmission and reception circuit for conducting wireless communication via antenna 1.

Next, an outline of a configuration of relay wireless apparatus 201 is described.

As illustrated in Fig. 1B, relay wireless apparatus 201 includes antenna 11, transmission and reception unit 12, beacon transmission unit 13, beacon reception unit 14, link connection unit 15, timing information analysis unit 16 and control unit 17.

Control unit 17 performs the time management on the entire relay wireless apparatus (the wireless communication apparatus) and performs the control on each unit. Furthermore, control unit 17 functions as the beacon signal creation unit and creates signal 353 for entry, along with the beacon signal (signal including regular beacon signal 351 and temporary beacon signal 352) described below. Furthermore, in a predetermined case, control unit 17 performs a search for a high-order apparatus and the like that are different from the high-order apparatus.

Transmission and reception unit 12 is configured from the wireless transmission and reception circuit for conducting wireless communication via antenna 11.

Next, an outline of a configuration of slave wireless apparatus 301 is described.

As illustrated in Fig. 1C, slave wireless apparatus 301 includes antenna 21, transmission and reception unit 22, beacon reception unit 23, link connection unit 24, timing information transmission unit 25, control unit 26, and storage unit 27.

Control unit 26 performs the time management on entire slave wireless apparatus 301 and performs the control on each unit. Furthermore, in a predetermined case, control unit 26 performs the search for a high-order apparatus and the like that are different from the high-order apparatus.

Transmission and reception unit 22 is configured from the wireless transmission and reception circuit for conducting wireless communication via antenna 21.

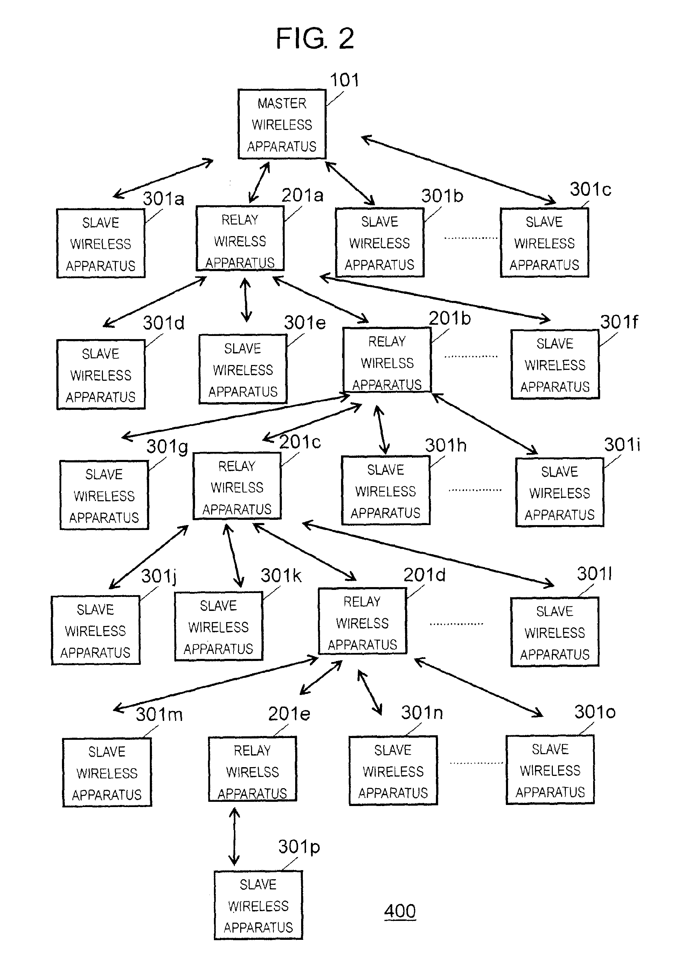

Fig. 2 is a view illustrating wireless communication system 400 according to the embodiment of the present invention.

As illustrated in Fig. 2, wireless communication system 400 includes master wireless apparatus 101, relay wireless apparatuses 201a to 201e (these are collectively described also as relay wireless apparatus 201), and slave wireless apparatuses 301a to 301p (these are collectively described also as slave wireless apparatus 301).

An outline of operation of wireless communication system 400 is described.

Master wireless apparatus 101 is able to conduct direct communication with slave wireless apparatuses 301a to 301c, but is not able to conduct the direct communication with slave wireless apparatuses 301d to 301p for the various reasons, such as a bad radio wave condition.

Then, master wireless apparatus 101 conducts communication with slave wireless apparatuses 301d to 301f via relay wireless apparatus 201a. Master wireless apparatus 101 conducts communication with slave wireless apparatuses 301g to 301i via relay wireless apparatus 201a and additionally via relay wireless apparatus 201b. Master wireless apparatus 101 conducts communication with slave wireless apparatuses 301j to 3011 via relay wireless apparatus 201a and relay wireless apparatus 201b, and additionally via relay wireless apparatus 201c. Master wireless apparatus 101 conducts communication with slave wireless apparatuses 301m to 301o via relay wireless apparatus 201a, relay wireless apparatus 201b and relay wireless apparatus 201c, and additionally via relay wireless apparatus 201d.

Master wireless apparatus 101 performs communication with slave wireless apparatuses 301p via relay wireless apparatus 201a, relay wireless apparatus 201b, relay wireless apparatus 201c, relay wireless apparatus 201d, and relay wireless apparatus 201e.

A signal for clock synchronization, called the beacon signal, is periodically transmitted from master wireless apparatus 101. Slave wireless apparatuses 301a to 301c and relay wireless apparatus 201a that connect directly to master wireless apparatus 101 capture the transmitted beacon signal in order to establish the synchronization with a clock of master wireless apparatus 101.

At this point, master wireless apparatus 101 is defined as the high-order apparatuses, and slave wireless apparatuses 301a to 301c and relay wireless apparatus 201a that connect directly to master wireless apparatus 101 as the high-order apparatus are defined as the low-order apparatuses.

In the same manner, relay wireless apparatus 201a operates as the master wireless apparatus with respect to slave wireless apparatuses 301d to 301f and relay wireless apparatus 201b, and relay wireless apparatus 201a periodically transmits the beacon signal for clock synchronization. Slave wireless apparatuses 301d to 301f and relay wireless apparatus 201b that connect directly to relay wireless apparatus 201a, periodically capture the transmitted beacon signal in order to establish the synchronization with a clock of relay wireless apparatus 201a. At this point, the high-order apparatus is relay wireless apparatus 201a, and the low-order apparatus is slave wireless apparatuses 301d to 301f and relay wireless apparatus 201b that connect directly to relay wireless apparatus 201a.

Furthermore, relay wireless apparatus 201b operates as the master wireless apparatus with respect to slave wireless apparatuses 301g to 301i and relay wireless apparatus 201c, and relay wireless apparatus 201b periodically transmits the beacon signal for clock synchronization. Slave wireless apparatuses 301g to 301i and relay wireless apparatus 201c that connect directly to relay wireless apparatus 201b periodically capture the transmitted beacon signal in order to establish the synchronization with a clock of relay wireless apparatus 201b. At this point, the high-order apparatus is relay wireless apparatus 201b, and the low-order apparatus is slave wireless apparatuses 301g to 301i and relay wireless apparatus 201c that connect directly to relay wireless apparatus 201b.

Furthermore, relay wireless apparatus 201c operates as the master wireless apparatus with respect to slave wireless apparatuses 301j to 3011 and relay wireless apparatus 201d, and relay wireless apparatus 201c periodically transmits the beacon signal for clock synchronization. Slave wireless apparatuses 301j to 3011 and relay wireless apparatus 201d that connect directly to relay wireless apparatus 201c periodically capture the transmitted beacon signal in order to establish the synchronization with a clock of relay wireless apparatus 201c. At this point, the high-order apparatus is relay wireless apparatus 201c, and the low-order apparatus is slave wireless apparatuses 301j to 3011 and relay wireless apparatus 201d that connect directly to relay wireless apparatus 201c.

Furthermore, relay wireless apparatus 201d operates as the master wireless apparatus with respect to slave wireless apparatuses 301m to 301o and relay wireless apparatus 201e, and relay wireless apparatus 201d periodically transmits the beacon signal for clock synchronization. Slave wireless apparatuses 301m to 301o and relay wireless apparatus 201e that connect directly to relay wireless apparatus 201d periodically capture the transmitted beacon signal in order to establish the synchronization with a clock of relay wireless apparatus 201d. At this point, the high-order apparatus is relay wireless apparatus 201d, and the low-order apparatus is slave wireless apparatuses 301m to 301o and relay wireless apparatus 201e that connect directly to relay wireless apparatus 201d.

Furthermore, relay wireless apparatus 201e operates as the master wireless apparatus with respect to slave wireless apparatus 301p and relay wireless apparatus 201e periodically transmits the beacon signal for clock synchronization. Slave wireless apparatus 301p that connects directly to relay wireless apparatus 201e periodically captures the transmitted beacon signal in order to establish the synchronization with a clock of relay wireless apparatus 201e. At this point, the high-order apparatus is relay wireless apparatus 201e, and the low-order apparatus is slave wireless apparatus 301p that connects directly to relay wireless apparatus 201e.

Wireless communication system 400 divides time axis into plural slots in order to conduct communication.

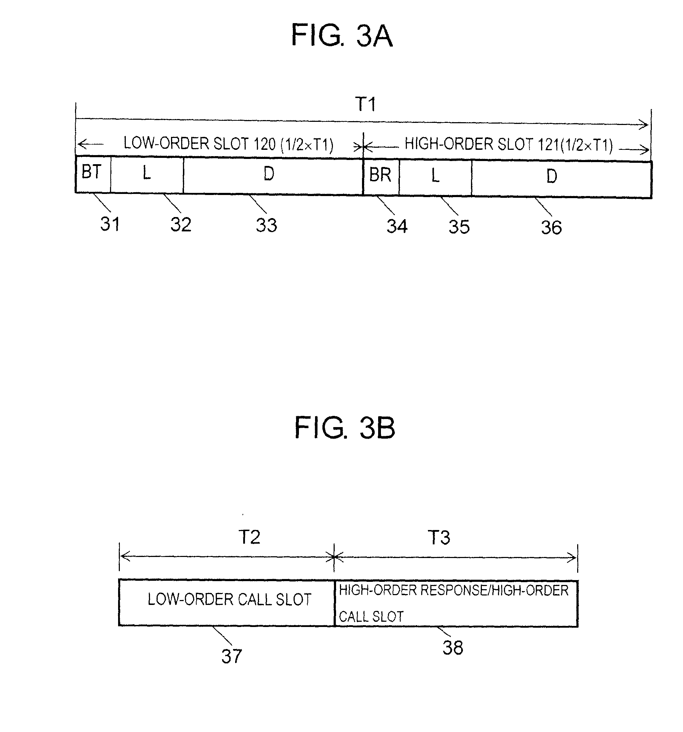

Fig. 3A is a view illustrating a configuration of a basic slot managed by wireless communication system 400 according to the embodiment of the present invention.

At this point, the basic slot is configured from T1 seconds, and the basic slot repeats along the time axis. The basic slot length T1 is, for example, 2 seconds. The basic slot further includes two slots of low-order slot 120 and high-order slot 121. A low-order slot length and a high-order slot length each have half of T1 time (for example, 1 second) .

Low-order slot 120 is a slot at which communication with the low-order apparatus is performed, and high-order slot 121 is a slot at which communication with the high-order apparatus is performed. Low-order slot 120, is further divided into 3 slots. Low-order slot 120 includes beacon transmission slot (BT) 31, link connection slot (L) 32, and data communication slot (D) 33.

In the same manner, high-order slot 121 is also divided into 3 slots. High-order slot 121 includes beacon reception slot (BR) 34, link connection slot (L) 35, and data communication slot (D) 36.

The high-order apparatus periodically transmits the beacon signal to the low-order apparatus, using beacon transmission slot (BT) 31. The high-order apparatus may transmit the beacon signal every time at beacon transmission slot (BT) 31, and may transmit at every plural beacon transmission slots (BT) 31. If the beacon signal is set in such a manner as to be transmitted at every two beacon transmission slots (BT) 31, when T1 = 2 seconds, a beacon transmission interval is 4 seconds.

At beacon reception slot (BR) 34, the low-order apparatus periodically receives the beacon signal from the high-order apparatus. An interval between receiving the beacon signals may be set to an integer plural of an interval between transmitting the beacon signals. For example, in a case where the beacon transmission interval is set to 2 seconds, the beacon reception interval, when set to 256 times 2 seconds, is 8 minutes 32 seconds.

Link connection slots (L) 32 and 35 are slots at which communication is performed to make a link connection between the high-order apparatus and the low-order apparatus. Data communication slots (D) 33 and 36 are slots at which communication is performed to perform data exchange between the high-order apparatus and the low-order apparatus after the link connection is established.

Fig. 3B is a view illustrating configurations of link connection slots (L) 32 and 35, among configurations of the basic slot managed by wireless communication system 400 according to the embodiment of the present invention.

As illustrated in Fig. 3B, link connection slots (L) 32 and 35 have low-order call slot 37 and high-order response/high-order call slot 38, respectively. Low-order call slot 37 is a slot at which the low-order apparatus transmits a link connection request signal when the low-order apparatus wants to make a link connection. Furthermore, high-order response/high-order call slot 38 is a slot at which the high-order apparatus returns a response to the link connection request signal from the low-order apparatus, or additionally the high-order apparatus transmits the link connection request signal when the high-order apparatus wants to make the link connection. Moreover, T2 indicates the slot length of low-order call slot 37, and T3 indicates the slot length of high-order response/high-order call slot 38.

At this point, the beacon transmission by master wireless apparatus 101 or relay wireless apparatus 201 is described. The beacon transmission in beacon transmission slot (BT) 31 is performed by beacon transmission unit 3 of master wireless apparatus 101, or beacon transmission unit 13 of relay wireless apparatus 201.

Next, the beacon reception by relay wireless apparatus 201 or slave wireless apparatus 301 is described. The beacon reception in beacon reception slot (BR) 34 is performed by beacon reception unit 14 of slave wireless apparatus 201, or beacon reception unit 23 of slave wireless apparatus 301.

Furthermore, link connection communication at link connection slots (L) 32 and 35 is performed by link connection unit 4 of master wireless apparatus 101, link connection unit 15 of relay wireless apparatus 201, or link connection unit 24 of slave wireless apparatus 301.

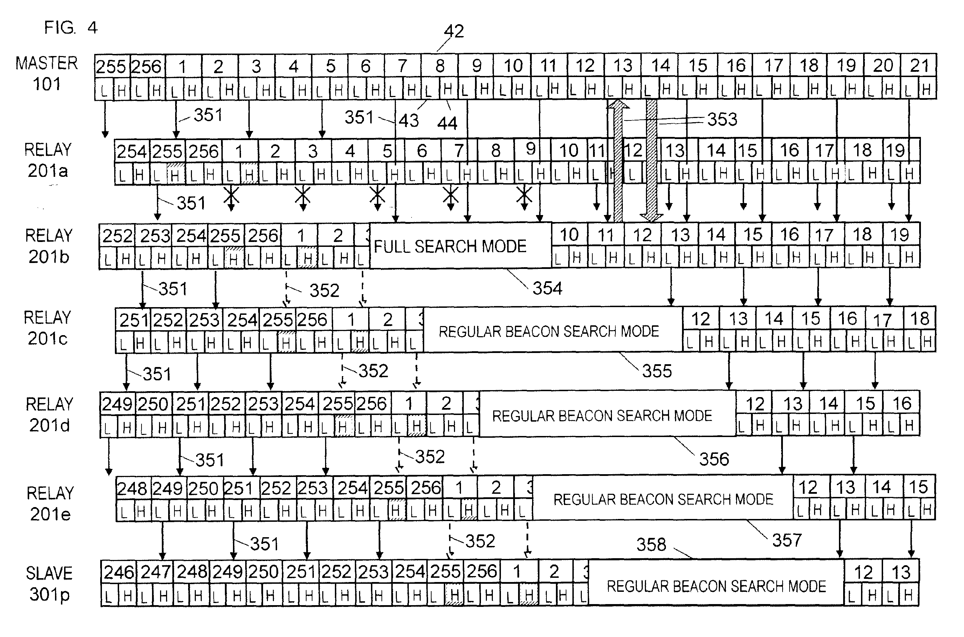

Fig. 4 is a view illustrating a slot position relationship between master wireless apparatus 101, relay wireless apparatuses 201a to 201e and slave wireless apparatus 301p according to the embodiment of the present invention.

Moreover, at this point, the description is provided using the communication between master wireless apparatus 101 and slave wireless apparatus 301p as one example, but the communication between master wireless apparatus 101 and other slave wireless apparatus 301 may be performed as well in the same manner.

The uppermost row of Fig. 4 indicates a slot at which master wireless apparatus 101 is managed. The second row from the top indicates the slot managed by relay wireless apparatus 201a. The third row from the top indicates the slot managed by relay wireless apparatus 201b. The fourth row from the top indicates the slot managed by relay wireless apparatus 201c. The fifth row from the top indicates the slot managed by relay wireless apparatus 201d. The sixth row from the top indicates the slot managed by relay wireless apparatus 201e. The lowermost row indicates the slot managed by slave wireless apparatus 301p.

Moreover, in Fig. 4, the notation "L" indicated at slot 43 indicates low-order slot 120 indicated in Fig. 3A. In the same manner, in Fig. 4, the notation "H" indicated at slot 44 indicates high-order slot 121 indicated in Fig. 3A.

Basic slot 42 is a slot that includes slot 43 that is low-order slot 120 and slot 44 that is high-order slot 121. Slot numbers from "1," to "256" are sequentially assigned to basic slot 42 and the slot number "1" is assigned to basic slot 42 that follows the slot number "256." Subsequently, the assignment of the slot numbers is repeated.

In Fig. 4, the number assigned to an upper portion of each slot configuration is the slot number. Furthermore, a signal indicated by a solid line is regular beacon signal 351 for synchronizing the clock of the low-order apparatus. A signal indicated by a dashed line is temporary beacon signal 352 that indicates that its own clock is not able to be synchronized with the clock of the high-order apparatus. A signal indicated by a thick arrow with slanted lines indicates signal 353 for entry.

Moreover, in some cases, for convenience, regular beacon signal 351 that is received from the high-order apparatus is referred to as a first regular beacon signal, regular beacon signal 351 that is transmitted to the low-order apparatus is referred to as a second regular beacon signal, temporary beacon signal 352 that is received from the high-order apparatus is referred to as a first temporary beacon signal, and temporary beacon signal 352 that is transmitted to the low-order apparatus is referred to as a second temporary beacon signal.

As illustrated in Fig. 4, regular beacon signal 351 or temporary beacon signal 352 is transmitted from every other beacon transmission slot (BT) 31 in low-order slot 120 of basic slot 42. Therefore, the following expression is created: the beacon transmission interval T5 = 2 x T1. When T1 = 2 seconds, T5 is 4 seconds.

First, regular beacon signal 351 is transmitted from master wireless apparatus 101.

Regular beacon signal 351 transmitted from master wireless apparatus 101 is periodically received by relay wireless apparatus 201a. Relay wireless apparatus 201a receives regular beacon signal 351 that is transmitted from the slot number "1" in master wireless apparatus 101. Information on the beacon number "1" that corresponds to the slot number "1" is included in regular beacon signal 351 that is transmitted from the slot number "1."

When receiving regular beacon signal 351 containing the beacon number "1," relay wireless apparatus 201a reconfigures the slot (clock synchronization) in such a manner that a head position of low-order slot 120 of the slot number "1" in master wireless apparatus 101 becomes a head position of high-order slot 121 of the slot number "255" in relay wireless apparatus 201a.

Then, relay wireless apparatus 201a, like master wireless apparatus 101, transmits regular beacon signal 351 at a position with the odd slot number.

Subsequently, the low-order apparatus also receives regular beacon signal 351 that is transmitted from the slot number "1" of the high-order apparatus, and thus reconfigures the slot of the low-order apparatus by establishing the synchronization with the timing of the high-order apparatus. An interval T4 during which the low-order apparatus receives regular beacon signal 351 of the high-order apparatus is 8 minutes and 32 seconds because the interval T4 is every 256 basic slots.

In Fig. 4, the beacon reception is performed at beacon reception slot (BR) 34 in high-order slot 121 indicated by hatching on the slot. Moreover, slave wireless apparatus 301p does not perform the transmission of regular beacon signal 351 and temporary beacon signal 352 because the low-order apparatus is not present that connects to slave wireless apparatus 301p.

Next, operations of relay wireless apparatus 201a and relay wireless apparatus 201b in a case where relay wireless apparatus 201b is not able to receive regular beacon signal 351 from relay wireless apparatus 201a are described. In high-order slot 121 of the slot number "255," relay wireless apparatus 201b performs an operation of receiving the regular beacon signal containing the beacon number "1," which relay wireless apparatus 201a transmits from low-order slot 120 of the slot number "1."

However, in a case where an obstacle such as a big building is newly built in such a manner as to block a transmission path between relay wireless apparatus 201a and relay wireless apparatus 201b, relay wireless apparatus 201b is not able to receive regular beacon signal 351 containing the beacon number "1, " which is transmitted from relay wireless apparatus 201a, because regular beacon signal 351 is attenuated. Marks X in Fig. 4 indicates a situation where relay wireless apparatus 201b is not able to receive regular beacon signal 351 that is transmitted from relay wireless apparatus 201a.

In a case where relay wireless apparatus 201b is not able to receive regular beacon signal 351, relay wireless apparatus 201b is not able to establish clock synchronization with relay wireless apparatus 201a that is the high-order apparatus. In such a case, instead of transmitting regular beacon signal 351, relay wireless apparatus 201b transmits temporary beacon signal 352 indicating that the clock synchronization with the high-order apparatus is not established, at the timing of the slot number "256."

Then, relay wireless apparatus 201b performs an operation of receiving the beacon at high-order slot 121 of the beacon signal "1" that is the timing when relay wireless apparatus 201a transmits regular beacon signal 351 or temporary beacon signal 352 the next time. Then, in a case where regular beacon signal 351 is received during the operation of receiving the beacon, the slot is reconfigured by establishing the clock synchronization with the high-order apparatus, and regular beacon signal 351 is transmitted to the low-order apparatus at the timing of low-order slot 120 of the slot number "3."

On the other hand, as illustrated in Fig. 4, in a case where regular beacon signal 351 is not able to be received even at the timing of the reception of the beacon of the slot number "1," relay wireless apparatus 201b transmits temporary beacon signal 352 again at the timing of the transmission of the beacon signal of the slot number "3." Then, in a case where regular beacon signal 351 or temporary beacon signal 352 is not able to be received during a given period of time, relay wireless apparatus 201b proceeds to full search mode 354.

At this point, full search mode 354 is a mode in which the wireless communication apparatus searches for all reception-possible regular beacon signals 351, including the current high-order apparatus (relay wireless apparatus 201a in a case of relay wireless apparatus 201b). Then, relay wireless apparatus 201 or master wireless apparatus 101, which is near to master wireless apparatus 101 and which transmits regular beacon signal 351 that has a good radio wave condition, is determined by relay wireless apparatus 201b, as a new high-order apparatus among plural regular beacon signals 351 that are searched for.

In the example in Fig. 4, in full search mode 354 , relay wireless apparatus 201b receives regular beacon signal 351 transmitted by master wireless apparatus 101. Relay wireless apparatus 201b selects master wireless apparatus 101 as the high-order apparatus, and reconfigures the slot by receiving regular beacon signal 351 from master wireless apparatus 101 and performing the clock synchronization. Then, after receiving regular beacon signal 351 containing a beacon number "13," transmitted by master wireless apparatus 101, relay wireless apparatus 201b conducts communication with master wireless apparatus 101 using signal 353 for entry, and reenters wireless communication system 400, with master wireless apparatus 101 as the high-order apparatus.

Next, operation of relay wireless apparatus 201c is described which is the low-order apparatus of relay wireless apparatus 201b. Relay wireless apparatus 201c performs the operation of receiving regular beacon signal 351 from relay wireless apparatus 201b at the timing of high-order slot 121 of the slot number "255, " but actually receives temporary beacon signal 352 instead of regular beacon signal 351. Temporary beacon signal 352 indicates that the clock synchronization of relay wireless apparatus 201b with the high-order apparatus is not established. Therefore, relay wireless apparatus 201c that received temporary beacon signal 352 performs the awaiting of the reception of the regular beacon at high-order slot 121 of the slot number "1" that is the timing of the reception of next regular beacon 351, without performing the clock synchronization. Then, when regular beacon signal 351 is able to be received, the clock synchronization with the high-order apparatus is established and the slot is reconfigured.

On the other hand, in a case where temporary beacon signal 352 is received again at high-order slot 121 of the slot number "1" as illustrated in Fig. 4, relay wireless apparatus 201c does not perform the clock synchronization. Then, in a case where regular beacon signal 351 is not able to be received during a given period of time, relay wireless apparatus 201c proceeds to regular beacon search mode 355. Regular beacon search mode 355 is a mode in which the wireless communication apparatus awaits regular beacon signal 351, transmitted by the current high-order apparatus (relay wireless apparatus 201b with respect to relay wireless apparatus 201c), with consecutive reception.

Here, the reason for relay wireless apparatus 201c to wait with the consecutive reception is described. A slot configuration changes greatly because relay wireless apparatus 201b that is the high-order apparatus becomes directly the low-order apparatus of master wireless apparatus 101. In this situation, relay wireless apparatus 201c is allowed to receive regular beacon signal 351 from relay wireless apparatus 201b even in a case where the clock synchronization deviates greatly between relay wireless apparatus 201b and relay wireless apparatus 201c.

When receiving the regular beacon signal of a beacon number "13" transmitted by relay wireless apparatus 201b in regular beacon search mode 355, relay wireless apparatus 201c reconfigures the slot by the clock synchronization with relay wireless apparatus 201b. Then, regular beacon signal 351 is transmitted at the timing of the transmission of the beacon of low-order slot 120 of the slot number "13."

Hereinafter, by the same operation, relay wireless apparatuses 201d and 201e reconfigure their respective slots by transmitting temporary beacon signal 352 and going through regular beacon search modes 356 and 357.

Slave wireless apparatus 301 does not transmit temporary beacon signal 352 and regular beacon signal 351, but the other operations are common to relay wireless apparatus 201. An example of slave wireless apparatus 301p is illustrated in Fig. 4.

Moreover, at this point, control units 17 and 26 perform control to determine whether relay wireless apparatus 201 and slave wireless apparatus 301 proceed to full search mode 354 or proceed to regular beacon search modes 355 to 358, for example, as follows.
(1) In a case where the low-order apparatus receives temporary beacon signal 352 from the high-order apparatus even one time during a predetermined period of time, the proceeding to regular beacon search modes 355 to 358 occurs.
(2) In a case where the low-order apparatus does not receive temporary beacon signal 352 from the high-order apparatus even one time during a predetermined period of time, the proceeding to full search mode 354 occurs.

The fact that the low-order apparatus is able to receive temporary beacon signal 352 from the high-order apparatus indicates that the communication quality of the transmission path between the high-order apparatus and the low-order apparatus is secured. Therefore, because there is no need to change a relationship between the high-order apparatus and the low-order apparatus, the low-order apparatus that received temporary beacon signal 352 may proceed to regular beacon search modes 355 to 358 in which the low-order apparatus continues to await regular beacon signal 351 from the high-order apparatus.

On the other hand, the fact that the low-order apparatus is not able to receive regular beacon signal 351 and temporary beacon signal 352 from the high-order apparatus indicates that the communication quality of the transmission path between the high-order apparatus and the low-order apparatus is not secured. Therefore, the proceeding to full search mode 354 in which the relationship between the high-order apparatus and the low-order apparatus is able to be changed occurs.

In wireless communication system 400 according to the present embodiment, temporary beacon signal 352 is introduced. Because of this, in a case where the low-order apparatus is not able to receive regular beacon signal 351 from the high-order apparatus, a distinction may be made between the fact that regular beacon signal 351 is not able to be received because the communication quality is bad between the high-order apparatus and the low-order apparatus, and the fact that the high-order apparatus is not able to issue regular beacon signal 351 because the communication quality is bad between the high-order apparatus and the other high-order apparatus which is further higher than that. Because of a result of making this distinction, the low-order apparatus may determine whether or not there is a need to proceed to full search mode 354. Furthermore, by receiving temporary beacon signal 352, slave wireless apparatus 301 that is the low-order apparatus of relay wireless apparatus 201 may establish rough synchronization with the master wireless apparatus and may be aware that relay wireless apparatus 201 is capturing the regular beacon signal of the high-order wireless communication apparatus that is higher in order.

Furthermore, in a case where regular beacon signal 351 of the high-order apparatus such as master wireless apparatus 101 is temporarily not able to be received, relay wireless apparatus 201 may perform the synchronization with the clock of the high-order apparatus, at the time when regular beacon signal 351 is able to be received. When regular beacon signal 351 of the high-order apparatus is permanently not able to be received because of an influence of a new building and the like, it is possible to reenter wireless communication system 400 by searching another high-order apparatus.

Furthermore, in a case where regular beacon signal 351 of the high-order apparatus such as relay wireless apparatus 201 is temporarily not able to be received, slave wireless apparatus 301 also may perform the synchronization with the clock of the high-order apparatus, at the time when regular beacon signal 351 is able to be received. Thus, when regular beacon signal 351 of the high-order apparatus is permanently not able to be received because of the influence of the new building and the like, it is possible to reenter wireless communication system 400 by searching another high-order apparatus.

Furthermore, a case is assumed where due to a change in the number of relay steps of the high-order apparatus, a slot relationship between the high-order apparatus and the low-order apparatus changes greatly and the timing of the transmission and reception of regular beacon signal 351 changes greatly. Even in such a case, the low-order apparatus may proceed to regular beacon search modes 355 to 358 by receiving temporary beacon signal 352. Thus, the low-order apparatus may capture regular beacon signal 351 transmitted by the high-order apparatus to which the low-order apparatus belongs. Therefore, because there is no need to change the high-order apparatus and there is no need to perform a reentry request on master wireless apparatus 101, wireless communication system 400 may be constructed which does not increase traffic unnecessarily. As a result, wireless communication system 400 with high communication reliability may be constructed.

At this point, a case where data is transmitted from master wireless apparatus 101 to slave wireless apparatus 301p is described. Relay wireless apparatuses 201a and 201b are defined as performing a carrier sensing operation for reception in high-order response/high-order call slot 38 among all high-order slots 121.

The carrier sensing operation for reception refers to an operation that detects whether or not a reception level is a predetermined level or above, and when the reception level is the predetermined level or below, stops the carrier sensing operation for reception and proceeds to a waiting state. On the other hand, when the reception level is the predetermined level or above, an operation of receiving a link connection signal from the high-order apparatus is performed. Therefore, in a case where a request for transmitting the data to slave wireless apparatus 301p occurs, for example, at the time of a slot number "5, " master wireless apparatus 101 transmits the link connection signal at high-order response/high-order call slot 38 among low-order slots 120 of a slot number "6."

Relay wireless apparatus 201a performs the carrier sensing for reception at high-order-response/high-order-call slot 38 among high-order slots 121 of a slot number "4," and after carrier-sensing the link connection signal from master wireless apparatus 101, receives it.

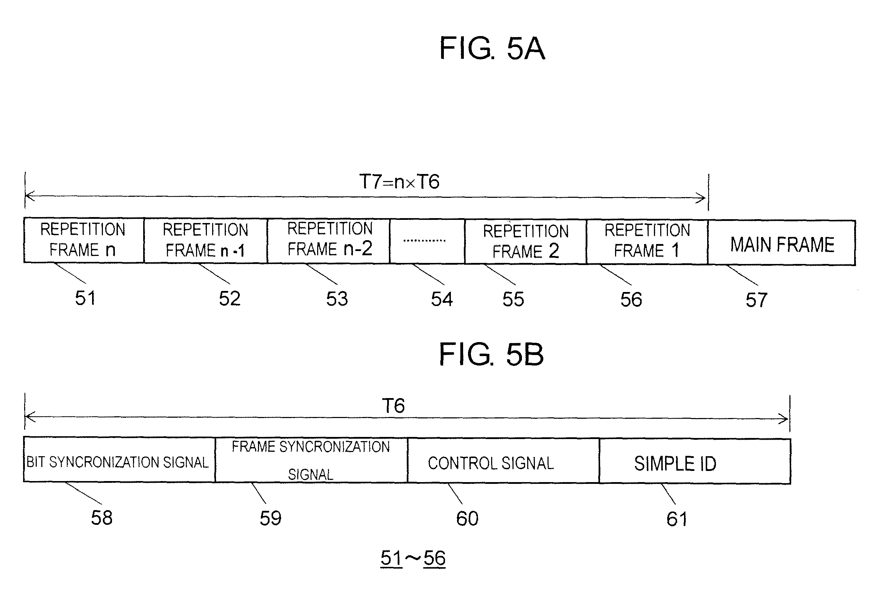

Fig. 5A is a view illustrating a message format of the link connection signal according to the embodiment of the present invention. Furthermore, Fig. 5B is a view illustrating configurations of repetition frames 51 to 56 thereof.

The link connection signal is configured from n repetition frames 51 to 56 and a main frame 57. Each of repetition frames 51 to 56 is configured from bit synchronization signal 58 for determining a sampling position of a bit, frame synchronization signal 59 for detecting a head of data included in a frame, control signal 60 on which various items of control information ride, and simple ID 61 that is short for an identification code (an identification code is hereinafter described as ID) for identifying the apparatus.

At this point, the ID is, for example, information that is expressed in 64 bits, and simple ID 61 is information that is expressed in 16 bits, a result of dividing the ID by 4. Among four divisions of 16 bits that results from dividing the ID by 4, information relating to a division of 16 bits that is defined as the simplified ID 61 rides on the control signal 60.

A length of the repetition frame of the link connection signal is T6. Therefore, length T7 of the n repetition frames is T7 = n x T6. Then, the repetition frame number from "1" to "n" is assigned to each of repetition frames 51 to 56 and that repetition frame number rides on the control signal 60. As illustrated in Fig. 5A, repetition frames 51 to 56 are transmitted in the order in which the repetition frame number of the repetition frame is increased, and the repetition frame number decrements one by one until the number of repetition frame 56 immediately before the main frame becomes "1."

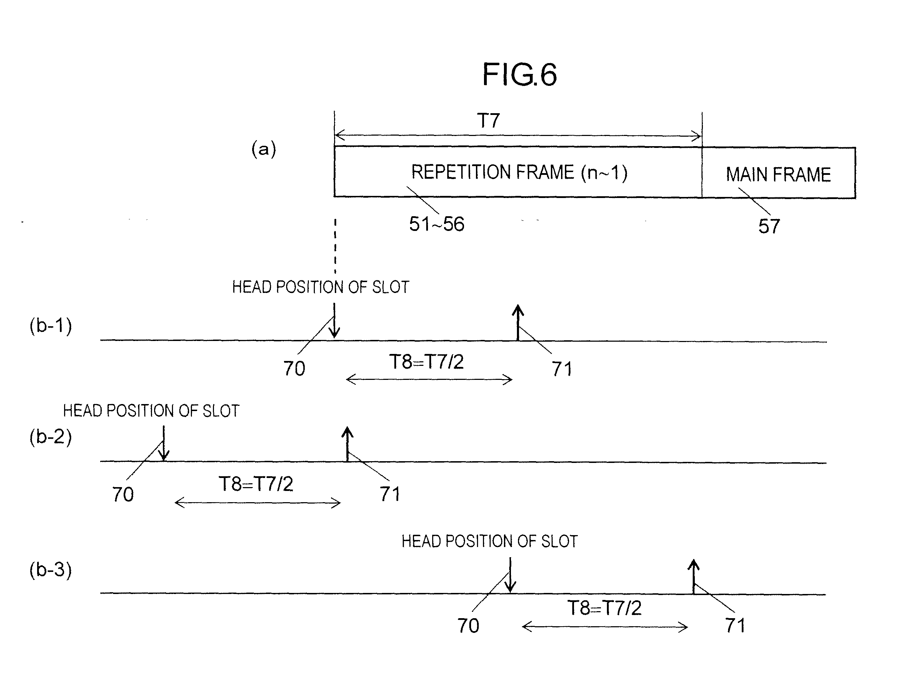

Fig. 6 is a view illustrating a carrier sensing timing of the low-order apparatus that carrier-senses reception of the link connection signal that is transmitted from the high-order apparatus and the link connection signal that is transmitted from the high-order apparatus according to the embodiment of the present invention.

In Fig. 6, a timing of the link connection signal is illustrated in the first step (a), a case where the clock does not deviate between the high-order apparatus and the low-order apparatus is illustrated in the second step (b-1), a case where the clock of the low-order apparatus is fast with respect to the clock of the high-order apparatus is illustrated in the third step (b-2), and a case where the clock of the low-order apparatus is slow with respect to the clock of the high-order apparatus is illustrated in the bottom step (b-3).

Head position 70 of high-order-response/high-order-call slot 38 of the low-order apparatus is illustrated in Fig. 6. Furthermore, reception carrier sensing timing 71 of the low-order apparatus is illustrated. Reception carrier sensing timing 71 is set to T8 = T7/2, from head position 70 of high-order-response/high-order-call slot 38. If the setting is done in this manner, when clock deviation ΔT between the high-order apparatus and the low-order apparatus falls into a range of - T8 < = ΔT < = T8, the main frame may be received by performing the reception carrier sensing somewhere between repetition frames 1 to n of the link connection signal, as illustrated in Fig. 6.

A maximum relative error of the clock between the high-order apparatus and the low-order apparatus is ±100 ppm, and when the low-order apparatus performs the clock synchronization every T4 = 512 seconds, the clocks deviate by a maximum of 51.2 ms with respect to each other. Therefore, when the number n of times that the repetition frame of the link connection signal is transmitted is set in such a manner that T8 >= 51.2 ms, this does not result in a reception failure. Therefore, in Fig. 4, in a case where the request for transmitting the data from master wireless apparatus 101 to slave wireless apparatus 301p occurs, for example, at the time of the slot number "5, " master wireless apparatus 101 transmits the link connection signal at high-order response/high-order call slot 38 among low-order slots 120 of the slot number "6. " Relay wireless apparatus 201a performs the reception carrier sensing at high-order-response/high-order-call slot 38 in high-order slot 121 of the slot number '"4," and after carrier-sensing the link connection signal from master wireless apparatus 101, receives it.

Since relay wireless apparatus 201a that is the low-order apparatus performs the clock synchronization at regular beacon signal 351 of the slot number "1," the clock error is almost not present at a position of the slot number "4 . "Therefore, with regard to the number of times that the repetition frame of the link connection signal is transmitted, the transmission with a deviation of 51.2 ms considered causes a lot of waste and there is the likelihood of increasing power consumption.

Then, the number of times that the repetition frame is transmitted during the link connection signal is made variable according to a period of time from the time when the clock synchronization is performed with regular beacon signal 351 containing the beacon number "1" to the timing when the reception carrier sensing is performed. For example, since the period of time from the time when the clock synchronization is performed with regular beacon signal 351 containing the beacon number "1" to the timing when the reception carrier sensing is performed, has a relationship with the slot number, the number of times that the repetition frame is transmitted during the link connection signal is made variable according to the slot number.

In a case where master wireless apparatus 101 transmits the link connection signal at the slot number "x," master wireless apparatus 101 sets the number of times that the repetition frame is transmitted, in such a manner that T7 > = x/256 x (± 51.2 ms). For example, because T7 > = ±0.8 ms in a case where the link connection signal is transmitted at the position of the slot number "4," the number of times that the repetition frame is transmitted may be 1 or greater in a case where length T6 of the repetition frame is greater than 0.8 ms.

In a case where the number of times that repetition frames 51 to 56 are transmitted is made variable, time T7 in Fig. 6 also becomes variable. Therefore, in a case where time T8 that is the reception carrier sensing timing is fixed, and the clock error between master wireless apparatus 101 and relay wireless apparatus 201a is ΔT = 0, reception carrier sensing timing 71 does not come to the center of T7.

By the clock error AT, this means that there is a difference in a tolerance of an error range in a positive case and in a negative case and this is not desirable. Then, in a case where ΔT = 0, T8 also is made variable in conjunction with T7, in such a manner that reception carrier sensing timing 71 comes to the center of T7 and the reception carrier sensing timing T8 is T8 = T7/2.

At this point, T7 may be known from the slot number. That is, the position of the slot number performing the reception carrier sensing, when converted into the slot number of master wireless apparatus 101, is defined as "x." In this case, it is understood that T7 of the link connection signal is T7 >= x/256 X (± 51.2 ms) .

The example is described above, in which T8 is made variable based on the slot number. As another method, T8 is set to a fixed value, and in turn, a transmission start position of the link connection signal illustrated in Fig. 6 may be made variable. The link connection signal from the high-order apparatus is transmitted at high-order-response/high-order-call slot 38 in link connection slot (L) 32 in Fig. 3A. At this point, the timing when the transmission of the link connection signal starts is made variable based on the slot number.

Because T7 is increased when the slot number is increased, the timing when the transmission of the link connection signal starts is advanced earlier and the center of T7 is made to come to the position of reception carrier sensing timing 71.

As illustrated above, master wireless apparatus 101 performs the link connection and the data communication with relay wireless apparatus 201a at the slot number "6, " and transmits the data to relay wireless apparatus 201a, in succession to a data communication request that occurs at the slot number "5" of master wireless apparatus 101.

By performing the same operation, relay wireless apparatus 201a transmits the data, which is received from master wireless apparatus 101 at the slot "4" of relay wireless apparatus 201a, to relay wireless apparatus 201b at the slot "5." Relay wireless apparatus 201b receives the data from relay wireless apparatus 201a at the slot "3."

Furthermore, by performing the same operation, relay wireless apparatus 201b transmits the data, which is received from relay wireless apparatus 201a at the slot "3" of relay wireless apparatus 201b, to relay wireless apparatus 201c at the slot "4." Relay wireless apparatus 201c receives the data from relay wireless apparatus 201b at the slot "2."

Furthermore, by performing the same operation, relay wireless apparatus 201c transmits the data, which is received from relay wireless apparatus 201b at the slot "2" of relay wireless apparatus 201c, to relay wireless apparatus 201d at the slot "3 . " Relay wireless apparatus 201d receives the data from relay wireless apparatus 201c at the slot "1."

Furthermore, by performing the same operation, relay wireless apparatus 201d transmits the data, which is received from relay wireless apparatus 201c at the slot "1" of relay wireless apparatus 201d, to relay wireless apparatus 201e at the slot "2 . " Relay wireless apparatus 201e receives the data from relay wireless apparatus 201d at the slot "256."

Furthermore, by performing the same operation, relay wireless apparatus 201e transmits the data, which is received from relay wireless apparatus 201d at the slot "256" of relay wireless apparatus 201e, to slave wireless apparatus 301p at the slot "1."

Slave wireless apparatus 301p performs the reception carrier sensing every four slots in order to reduce power consumption. The slot number at which slave wireless apparatus 301p performs the reception carrier sensing may be known from route information included in the signal addressed to slave wireless apparatus 301p, which is transmitted from master wireless apparatus 101, and which is relay-transmitted using relay wireless apparatuses 201a to 201e. The route information is described in detail below.

At this point, as a result of interpreting the route information, the slot number at which slave wireless apparatus 301p performs the reception carrier sensing is defined as "1, " "5 ," "9" and so forth. Therefore, relay wireless apparatus 201e transmits the link connection signal and the data, at the low-order slot of the slot number "7" of relay wireless apparatus 201e that corresponds to the slot number "5" of slave wireless apparatus 301p, which slave wireless apparatus 301p awaits with the reception carrier sensing. An operation that relay wireless apparatus 201e performs to make a connection to slave wireless apparatus 301p is also the same as the operation described in Fig. 6.

Next, a case where data is transmitted from slave wireless apparatus 301p to master wireless apparatus 101 is described. In a case where the transmission from the low-order apparatus to the high-order apparatus occurs, the low-order apparatus receives regular beacon signal 351 transmitted by the high-order apparatus, and transmits the link connection signal illustrated in Fig. 5A, at low-order call slot 37 in link connection slot (L) 35 immediately after beacon reception slot (BR) 34 at which regular beacon signal 351 is received.

A detailed description is provided. Slave wireless apparatus 301p performs an operation of receiving the beacon signal of relay wireless apparatus 201e. Since regular beacon signal 351 from relay wireless apparatus 201e is transmitted every two slots (every four seconds), slave wireless apparatus 301p may receive regular beacon signal 351 of relay wireless apparatus 201e within 4 seconds after a data transmission request occurs.

For example, in Fig. 4, in a case where the data transmission request occurs at a place in the slot number "252" of slave wireless apparatus 301p, regular beacon signal 351 of the beacon number "255" from relay wireless apparatus 201e is received at the slot number "253" of slave wireless apparatus 301p. Then, slave wireless apparatus 301p performs the clock synchronization with regular beacon signal 351 of the beacon number "255" received from relay wireless apparatus 201e.

Then, slave wireless apparatus 301p performs an operation of making a link connection by performing correction on the position of link connection slot (L) 35, illustrated in Fig. 3A, in high-order slot 121 of the slot number "253", and transmitting the link connection signal to relay wireless apparatus 201e.

Relay wireless apparatus 201e performs the operation of making a link connection to slave wireless apparatus 301p, at low-order slot 120 of the slot number "255" of relay wireless apparatus 201e. An operation of receiving the signal for making a connection to relay wireless apparatus 201e, from slave wireless apparatus 301p, is also the same as the operation described in Fig. 6. A configuration of the link connection signal is the same as in the signal illustrated in Fig. 6, but the number of times that the repetition frame is transmitted may be decreased because the clock error is almost not present.

After the link connection is completed, slave wireless apparatus 301p transmits the signal addressed to master wireless apparatus 101, at data communication slot (D) 36 in same high-order slot 121, at which the link connection is performed. Relay wireless apparatus 201e receives the signal addressed to master wireless apparatus 101, at data communication slot (D) 33 in low-order slot 120 that corresponds to slave wireless apparatus 301p.

Next, relay wireless apparatus 201e receives regular beacon signal 351 transmitted by relay wireless apparatus 201d at the slot number "255" of relay wireless apparatus 201e, and performs the clock synchronization with received regular beacon signal 351. Relay wireless apparatus 201e performs the link connection operation by performing the correction on the position of link connection slot (L) 35 at high-order slot 121 of the slot number 255, and transmitting the link connection signal to relay wireless apparatus 201d.

Relay wireless apparatus 201d performs the operation of making a link connection to relay wireless apparatus 201e, at the low-order slot of the slot number "1." Then, after the link connection is completed, relay wireless apparatus 201e transmits the signal addressed to master wireless apparatus 101, at data communication slot (D) 36 in same high-order slot 121, at which the link connection is performed. Then, relay wireless apparatus 201d receives the signal addressed to master wireless apparatus 101, at data communication slot (D) 33 in low-order slot 120 that corresponds to relay wireless apparatus 201e. Subsequently, the same operation is performed in relay wireless apparatuses 201c and 201b as well.

Then, relay wireless apparatus 201a receives regular beacon signal 351 transmitted by master wireless apparatus 101 at the slot number "7" of relay wireless apparatus 201a, and performs the clock synchronization with received regular beacon signal 351. Relay wireless apparatus 201a performs the link connection operation by performing the correction on the position of link connection slot (L) 35 at high-order slot 121 of the slot number 7, and transmitting the link connection signal to master wireless apparatus 101.

Master wireless apparatus 101 performs the operation of making a link connection to relay wireless apparatus 201a, at low-order slot 120 of the slot number "9" of master wireless apparatus 101. Then, after the link connection is completed, relay wireless apparatus 201a transmits the signal addressed to master wireless apparatus 101, at data communication slot (D) 36 in same high-order slot 121, at which the link connection is performed.

Then, master wireless apparatus 101 receives the signal addressed to master wireless apparatus 101, at data communication slot (D) 33 in low-order slot 120 that corresponds to relay wireless apparatus 201a.

As described above, the beacon signal is transmitted from the high-order apparatus, at the slot immediately after transmitting the beacon signal from the low-order apparatus. For this reason, the signal addressed to master wireless apparatus 101, which occurs from slave wireless apparatus 301p may be efficiently relay-transmitted without a long delay in the relay transmission to master wireless apparatus 101.

At this point, in wireless communication system 400 described above, an operation is described which is performed when a power supply of slave wireless apparatus 301 turns on and the entering of wireless communication system 400 occurs. Slave wireless apparatus 301 performs a predetermined clock reception operation and performs the reception of regular beacon signal 351. In a case where plural regular beacon signals 351 are received within a predetermined time, slave wireless apparatus 301 determines with which regular beacon signal 351 the clock of the slave wireless apparatus is synchronized, using a reception level of received regular beacon signal 351 and information on the number of relay steps of relay wireless apparatus 201 that transmits the received beacon signal.

In a configuration illustrated in Fig. 2, for example, in a case where slave wireless apparatus 301g enters wireless communication system 400, the clock synchronization is performed by receiving regular beacon signal 351 of relay wireless apparatus 201b. Then, slave wireless apparatus 301g transmits the link connection signal illustrated in Fig. 5A to relay wireless apparatus 201b, at low-order-call slot 37 in link connection slot (L) 35 that follows regular beacon signal 351. The number of the repetition frames is "5. "

Then, slave wireless apparatus 301g receives a response signal for approving the link connection, from relay wireless apparatus 201b, at the high-order-response/high-order-call slot 38. By the operation so far, the link connection is established between relay wireless apparatus 201b and slave wireless apparatus 301g.

Next, slave wireless apparatus 301g requests relay wireless apparatus 201b to relay the entry request signal addressed to master wireless apparatus 101 as the final destination, by transmitting the entry request signal to relay wireless apparatus 201b that has the established link connection, at data communication slot (D) 36.

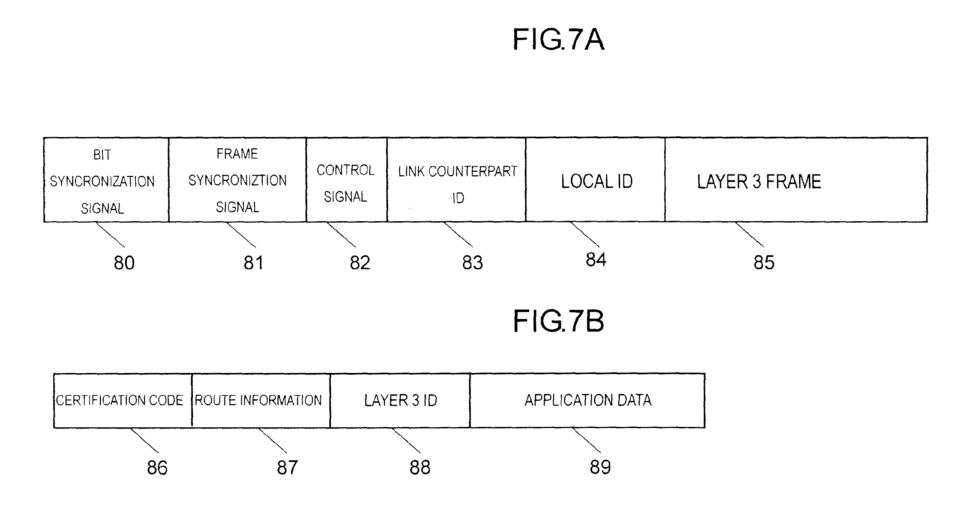

Fig. 7A is a view illustrating a format of the data communication signal that is transmitted at data communication slot (D) 36, according to the embodiment of the present invention. Furthermore, Fig. 7B is a view illustrating a configuration of layer 3 frame 85 thereof.

Slave wireless apparatus 301g transmits the data communication signal, illustrated in Fig. 7A, to relay wireless apparatus 201b. The data communication signal includes bit synchronization signal 80, frame synchronization signal 81, control signal 82, link counterpart ID 83, and local ID 84 and layer 3 frame 85. At this point, link counterpart ID 83, among the signals transmitted to relay wireless apparatus 201b is the ID of relay wireless apparatus 201b, and the local ID is the ID of slave wireless apparatus 301g.

Information on a signal length from link counterpart ID 83 finally to layer 3 frame 85 is contained in control signal 82. Therefore, it is possible to know to what extent the signal is to be received, by performing a reception analysis on control signal 82.

As illustrated in Fig. 7B, layer 3 frame 85 is a frame signal that is relay-transmitted to the final destination. That is, layer 3 frame 85 that is transmitted from slave wireless apparatus 301g illustrated in Fig. 2 is transmitted to master wireless apparatus 101, through relay wireless apparatus 201b and relay wireless apparatus 201a as a relay course.

Certification code 86 is a code for checking whether or not layer 3 frame 85 is a regular frame. Route information 87, that is, information on a route from slave wireless apparatus 301g to master wireless apparatus 101 is created in each relay wireless apparatus 201 and is transmitted to master wireless apparatus 101. The ID of slave wireless apparatus 301g, which is the first transmission source, enters a layer 3 ID88. Application data 89 is data relating to an application that is wished to transmit to master wireless apparatus 101.

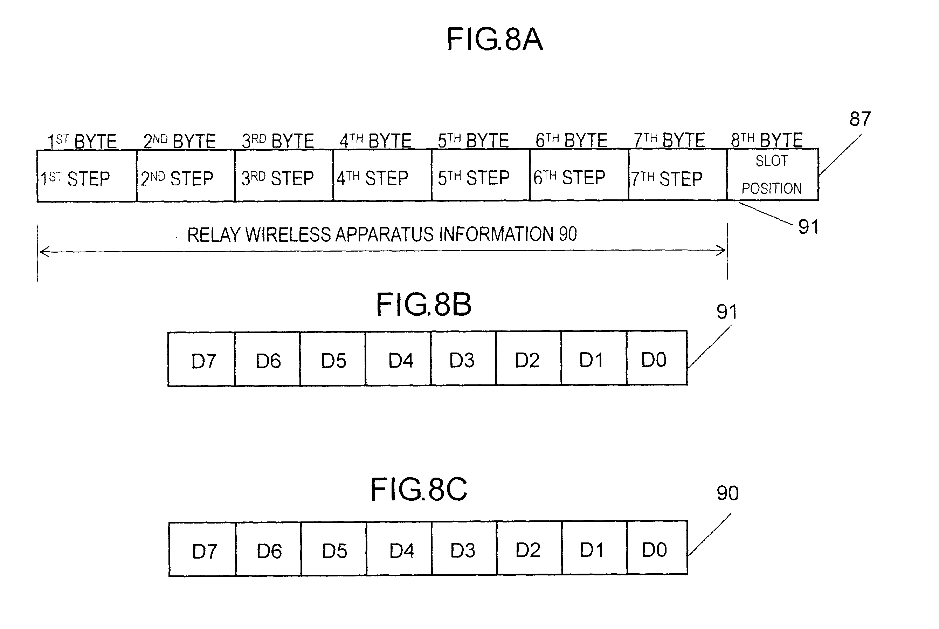

Fig. 8A is a view illustrating a configuration of route information 87 according to the embodiment of the present invention.

Route information 87 is configured from the 8-byte data, and information (relay wireless apparatus information 90) on relay wireless apparatuses 201 present on the route from slave wireless apparatus 301g to master wireless apparatus 101 enters an area from the initial and first byte to the seventh byte. Slave wireless apparatus 301g transmits the data communication signal, illustrated in Fig. 7A, to relay wireless apparatus 201b to which slave wireless apparatus 301g belongs. Route information 87 includes table number and slot position information 91, retained by relay wireless apparatus 201 in each step.

At this time, slot position information 91 relating to the slot at which slave wireless apparatus 301g awaits the reception of the signal from relay wireless apparatus 201b, that is, the carrier sensing for reception is performed, enters the slot position that is the eighth byte of route information 87.

Fig. 8B is a view illustrating a bit configuration of slot position information 91 according to the embodiment of the present invention. Slot position information 91 is configured from 8 bits, as illustrated in Fig. 8B.

The meanings of each bit of slot position information 91 are described.

The bits D7 to D6 are a fixed value of "0." The two bits, bits D5 to D4 indicate an intermittent reception period m of relay wireless apparatus 201 and slave wireless apparatus 301 in wireless communication system 400. Usually, relay wireless apparatus 201 awaits the reception, when m = 1, that is, at all the slots. When m = 2, relay wireless apparatus 201 awaits the reception every two slots.

The 4 bits, the bits D3 to D0, are center polling, that is, indicate a slot position number y relating to the slot at which the awaiting of reception of the signal from relay wireless apparatus 201 that is the high-order apparatus occurs. The slot position number y indicates that the corresponding slot is the (y - 1) -th slot when counting from a reference slot number defined below. At this point, a range of y = 1 to intermittent reception period m is provided.

The definition of the reference slot number is "reference slot number = a x m + 1." In this expression, the reference slot number is an integer that ranges from a = 0 to (the number of slots 255/intermittent reception period m). That is, the reference slot is defined as present every slot number 1, m + 1, 2 x m + 1, and forth and m slots, as illustrated in Fig. 4,

Therefore, the slot number x is defined as "slot number x at which the awaiting of the reception occurs = reference slot number + slot position number y - 1 . " Then, slave wireless apparatus 301 transmits two items of information, the intermittent reception period m of slave wireless apparatus 301 and the slot position number y to master wireless apparatus 101, with slot position information 91. Then, a route information table of slave wireless apparatus 301 is created in master wireless apparatus 101.

The intermittent reception period m preferably uses a common value in wireless communication system 400, but may differ from one slave wireless apparatus 301 to another. Each slave wireless apparatus 301 arbitrarily sets the slot position number y. Route information 87 created in slave wireless apparatus 301 is only slot position information 91, and "0 x 00" is inserted into the relay wireless apparatus information from the first byte to the seventh byte. Moreover, in a case where the transmission source is relay wireless apparatus 201, "0 x FF" is input.

Like this, in slave wireless apparatus 301, the creation and the transmission of slot position information 91 that is the intermittent reception awaiting timing is performed by timing information transmission unit 25. Then, the information relating to slot position information 91 is stored in storage unit 27.

An advantage of slave wireless apparatus 301 determining the slot position at the time of entry is that after transmitting the entry request signal to master wireless apparatus 101, slave wireless apparatus 301 receives an entry approval signal from master wireless apparatus 101 and determines the intermittent reception awaiting slot for it. Thus, slave wireless apparatus 301 may wait in a waiting state until the intermittent reception awaiting slot.

At this point, an outline of route information management in wireless communication system 400 is described. Slave wireless apparatus 301 manages only the slot position information on relay wireless apparatus 201 to which slave wireless apparatus 301 belongs. Relay wireless apparatus 201 manages relay wireless apparatus 201 that belongs to immediately low-order of relay wireless apparatus 201, as the table, and the management is provided in such a manner that the table number and relay wireless apparatus 201 that belongs to immediately low-order of relay wireless apparatus 201 are matched to each other.

Master wireless apparatus 101 manages the slot position information on slave wireless apparatus 301 and the table number information on relay wireless apparatus 201 present on the route to slave wireless apparatus 301.

Fig. 8C is a view illustrating the bit configuration of relay wireless apparatus information 90 according to the embodiment of the present invention.

The bit configuration of the relay wireless apparatus information 90 is described. The meaning of D7 differs between the case in which communication is conducted from the high-order apparatus to the low-order apparatus and the case in which communication is conducted from the low-order apparatus to the high-order apparatus. In the case of the communication from the high-order apparatus to the low-order apparatus, "D7" indicates whether or not a request for deletion of the table number is present, and master wireless apparatus 101 performs the request for deletion. On the other hand, in the case of the communication from the low-order apparatus to the high-order apparatus, "D7" is an identifier that identifies whether or not the table retained by each relay wireless apparatus 201 is full.

The meaning of D6 also differs between the case in which communication is conducted from the high-order apparatus to the low-order apparatus and the case in which communication is conducted from the low-order apparatus to the high-order apparatus. In the case of the communication from the high-order apparatus to the low-order apparatus, "D6" is fixedly set to "0." On the other hand, in the case of the communication from the low-order apparatus to the high-order apparatus, "D6" becomes an identifier that indicates whether immediately low-order relay wireless apparatus 201 is registered in the table, and therefore whether relay wireless apparatus 201 is registered in the table for the first time.

The 6 bits, "D5" to "D0" indicate the table number of immediately low-order wireless apparatus 201 managed by relay wireless apparatus 201 present on the relay route. The maximum table number that is manageable is "63." In this manner, except for the table number "0," 63 relay wireless apparatuses 201 that ranges in table number from "1" to "63" are able to be managed.

Relay wireless apparatus 201 that receives route information 87 from slave wireless apparatus 301 analyses the byte that corresponds to the step order to which relay wireless apparatus 201 belongs, in received route information 87. For example, because relay wireless apparatus 201b is in the second step, the second byte is analyzed. When an analysis result is "0 x 00," this is interpreted as a relay request whose transmission source is any one of slave wireless apparatuses 301g to 301i belonging to relay wireless apparatus 201b. When the analysis result is "0 x FF," this is interpreted as meaning that the transmission source is relay wireless apparatus 201c.

When it is interpreted as the relay request from slave wireless apparatuses 301g to 301i, relay wireless apparatus 201b sets the table number "0" in the byte in the step order to which relay wireless apparatus 201b belongs, that is, "D5" to "D0" in the second byte. In the example in Fig. 2, since the relay request is from slave wireless apparatus 301g, the table number "0" is set in "D5" to "D0" in the second byte.

When the analysis result is "0 x FF," it is determined that the relay request comes from relay wireless apparatus 201c and the table number that corresponds to this relay wireless apparatus 201c is set in "D5" to "D0" in the byte in the step order to which relay wireless apparatus 201b belongs.

In a case where regardless of the relay request coming from relay wireless apparatus 201c there is no information on relay wireless apparatus 201c in the table managed by relay wireless apparatus 201b, that relay wireless apparatus 201c is registered in the table and the registered table number is set in "D5" to "D0" in the byte in the step order to which relay wireless apparatus 201b belongs.

Route information 87 described above is transmitted from relay wireless apparatus 201b to relay wireless apparatus 201a. Then, in relay wireless apparatus 201a, in the same way as in relay wireless apparatus 201b, an operation of analyzing and creating route information 87 is performed. Then, the table number that corresponds to relay wireless apparatus 201b is set in "D5" to "D0," in the first byte to which relay wireless apparatus 201a belongs and that corresponds to the first step. Then, relay wireless apparatus 201a transmits created route information 87 to master wireless apparatus 101.

In relay wireless apparatus 201a and relay wireless apparatus 201b, the analysis and the creation of route information 87 including slot position information 91 that is the intermittent reception awaiting timing in the slave wireless apparatus is performed in timing information analysis unit 16.

Master wireless apparatus 101 may know the relay route to slave wireless apparatus 301g by analyzing route information 87 transmitted from the low-order apparatus. That is, the table number that corresponds to the ID of relay wireless apparatus 201b and is managed by relay wireless apparatus 201a is input to the first byte of route information 87. Furthermore, since the table information on the second byte of route information 87 is the table number "0," it is indicated that the transmission source is the slave wireless apparatuses g to i.

Then, the intermittent reception period m of slave wireless apparatus 301g that is the transmission source and the information on the slot position number y is input to the eighth byte of route information 87. The ID of slave wireless apparatus 301g that is the transmission source may be known from the layer 3 ID 88 illustrated in Fig. 7B.

In master wireless apparatus 101, the creation and the analysis of relay wireless apparatus information 90 is performed by route information analysis and creation unit 5. Furthermore, in slave wireless apparatus 301, the creation and the transmission of slot position information 91 that is the intermittent reception awaiting timing is performed by timing information transmission unit 25. Then, information relating to route information 87 including slot position information 91 and relay wireless apparatus information 90 is stored in storage unit 27.

In this manner, master wireless apparatus 101 may know the route information on all slave wireless apparatuses 301a to 301p that belong to wireless communication system 400, from route information 87 included in the signal that each of slave wireless apparatuses 301a to 301p transmits to master wireless apparatus 101 at the time of entry, and may create a route information table.

Next, a case where master wireless apparatus 101 transmits polling data to slave wireless apparatus 301g is described as an example. Master wireless apparatus 101 creates route information 87 that includes the relay route to slave wireless apparatus 301g, the intermittent reception period m of slave wireless apparatus 301g, and the slot position number y, referring to the route information table retained by patent wireless apparatus 101.

Master wireless apparatus 101 transmits the link connection signal illustrated in Fig. 5A to relay wireless apparatus 201a, at the high-order-response/high-order-call slot 38 in link connection slot (L) 32 of low-order slot 120. Relay wireless apparatus 201a may receive the link connection signal addressed to relay wireless apparatus 201a from master wireless apparatus 101, because relay wireless apparatus 201a awaits the intermittent reception at all the high-order-response/high-order-call slot 38.

Relay wireless apparatus 201a receives the data communication signal illustrated in Fig. 7A, which is transmitted from master wireless apparatus 101 at data communication slot (D) 36, and checks the layer 3 ID 88 included in layer 3 frame 85. When the data communication signal is not addressed to relay wireless apparatus 201a, relay wireless apparatus 201a analyzes the first byte of route information 87 (refer to the bit configuration of relay wireless apparatus information 90 in Fig. 8C) as the relay request. When the table number that is written to the "D5" to "D0" bits in the first byte is "0," this indicates that the data communication signal is addressed to slave wireless apparatuses 301d to 301f that belong immediately to the local address.

In this example, since the data communication signal is a signal addressed to slave wireless apparatus 301g, the table number that is written to the "D5" to "D0" bits in the first byte is a number of the table in which the ID of relay wireless apparatus 201b is written. Therefore, from the table number that is written to the "D5" to "D0" bits in the first byte, relay wireless apparatus 201a may refer to the table retained by relay wireless apparatus 201a, and may know the ID of relay wireless apparatus 201b that is the next relay destination.

Relay wireless apparatus 201a performs the link connection to relay wireless apparatus 201b and relay-transmits the data communication signal to relay wireless apparatus 201b, in the same manner as master wireless apparatus 101. Relay wireless apparatus 201b performs the same analysis operation as relay wireless apparatus 201a described above, and checks the table number that is written to "D5" to "D0" bits in the second byte of route information 87. Since the table number that is written to the "D5" to "D0" bits in the second byte is "0," the data communication signal is recognized as addressed to slave wireless apparatuses 301g to 301i that belong to immediately low-order of relay wireless apparatus 201b address.

Relay wireless apparatus 201b may know the ID of slave wireless apparatus 301g that belongs immediately to the local station, using the layer 3 ID 88 included in the received data communication signal. The ID of slave wireless apparatus 301g, which is the last destination, is written to the layer 3 ID 88.

Relay wireless apparatus 201b may analyze slot position information 91 in the eighth byte of route information 87 and thus may know the intermittent reception period m and the slot position number y of slave wireless apparatus 301g. As illustrated above, relay wireless apparatus 201b computes the slot at which slave wireless apparatus 301g awaits the intermittent reception, from the intermittent reception period m and the slot position number y. At such a slot, relay wireless apparatus 201b performs the link connection to slave wireless apparatus 301g and relay-transmits the data communication signal.

Layer 3 frame 85 is created in master wireless apparatus 101, and relay wireless apparatus 201a and relay wireless apparatus 201b relay-transmit layer 3 frame 85, as it is, to slave wireless apparatus 301g without making any amendment to it. Then, slave wireless apparatus 301g may receive the application data 89 from master wireless apparatus 101.

As described above, the reception awaiting slot information on slave wireless apparatus 301 is transmitted from master wireless apparatus 101, with riding on the signal at the time of communication. Thus, relay wireless apparatus 201 may have only the table by which to manage only relay wireless apparatus 201 that belongs to immediately low-order of relay wireless apparatus 201 and does not need to have information on slave wireless apparatus 301 that belong to immediately low-order of relay wireless apparatus 201. Therefore, it is not necessary to impose any limitation on the number of the slave wireless apparatuses 301 that belong to immediately low-order of relay wireless apparatus 201. In other words, the table retained by relay wireless apparatus 201 may be made small.

Moreover, the table storing the information on the route to slave wireless apparatus 301 may be made small also in master wireless apparatus 101. For example, master wireless apparatus 101 needs to manage the ID of relay wireless apparatus 201a that is immediately below it, but may manage the table number of relay wireless apparatus 201b managed by relay wireless apparatus 201a, instead of managing the ID of relay wireless apparatus 201b that is not immediately below it. When the maximum number of the relay wireless apparatuses managed by each relay wireless apparatus 201 is assumed to be "63," the number of the tables necessary is "63," and 6-bit information is sufficient to express the table number. Therefore, 6 bit management works as well as 64-bit management on a basis of one relay wireless apparatus 201.

Furthermore, the number of bytes of the route information may be decreased because the route information riding on the data communication signal is not the ID of relay wireless apparatus 201 on the relay route, but the table number corresponding to ID. For example, when the maximum number of relay wireless apparatuses 201 managed by each relay wireless apparatus 201 is assumed to be "63," the relay route per one step may be set with 6-bit information.

Generally, the ID for designating the wireless communication apparatus needs as many as 64 bits. Therefore, when a method of transmitting the ID of relay wireless apparatus 201 on the relay route as the route information is used, the route information becomes significantly large in amount and a waste occurs in terms of communication. In contrast, as illustrated in the present embodiment, according to the method of transmitting the table number as the route information, the route information may be made small in amount and efficient communication may be performed.

According to the present embodiment, master wireless apparatus 101 manages the slot position information on slave wireless apparatus 301g in terms of storage, but instead relay wireless apparatus 201b may manage the slot position information. In that case, the table of relay wireless apparatus 201b increases in size, but there is an advantage in that the slot position information in the eighth byte of route information 87 becomes unnecessary.

Moreover, the present embodiments are described on the assumption that wireless communication system 400 includes three kinds of wireless apparatus, which are master wireless apparatus 101, relay wireless apparatus 201, and slave wireless apparatus 301. However, the wireless communication system may be configured to include master wireless apparatus 101 and relay wireless apparatus 201, master wireless apparatus 101 and slave wireless apparatus 301, or relay wireless apparatus 201 and slave wireless apparatus 301. From a perspective of a relationship between slave wireless apparatus 301 and relay wireless apparatus 201, relay wireless apparatus 201 becomes master wireless apparatus 101 that is the high-order apparatus.

Furthermore, according to the present embodiment, master wireless apparatus 101, relay wireless apparatus 201, and slave wireless apparatus 301, which make up wireless communication system 400, are described in such a manner as to be configured as hardware, respectively. However, the present invention is not limited to these examples. A function of at least one part of each constituent element may be realized by being described using software and by being computer-implemented. In such a case, distribution, update, and installation of the program may be simply performed by performing distribution of the program that is recorded on a recordable medium and distribution of the program over a communication line.

### INDUSTRIAL APPLICABILITY

As described above, according to the present invention, in a wireless communication system, a wireless communication apparatus and a wireless communication method may be provided in which synchronization deviation is difficult to occur and high reliability is achieved. Accordingly, the present invention is useful as a wireless communication system that includes a wireless communication apparatus which transmits a beacon signal and a wireless communication apparatus which establishes clock synchronization by receiving the beacon signal, and particularly a wireless communication apparatus, a wireless communication method and the like that are used in the wireless communication system.

### REFERENCE MARKS IN THE DRAWINGS

- 1, 11, 21: ANTENNAS
- 2, 12, 22: TRANSMISSION AND RECEPTION UNIT
- 3, 13: BEACON TRANSMISSION UNIT
- 4, 15, 24: LINK CONNECTION UNIT
- 5: ROUTE INFORMATION ANALYSIS AND CREATION UNIT
- 6, 25: TIMING INFORMATION TRANSMISSION UNIT
- 7, 17, 26: CONTROL UNIT
- 8, 27: STORAGE UNIT
- 14, 23: BEACON RECEPTION UNIT
- 16: TIMING INFORMATIN ANALYSIS UNIT
- 31: BEACON TRANSMISSION SLOT (BT)
- 32, 35: LINK CONNECTION SLOT (L)
- 33, 36: DATA COMMUNICATION SLOT (D)
- 34: BEACON RECEPTION SLOT (BR)
- 37: LOW-ORDER CALL SLOT
- 38: HIGH-ORDER/HIGH-ORDER CALL SLOT
- 42: BASIC SLOT
- 43, 44: SLOT
- 51-56: REPETITION FRAME
- 57: BASIC FRAME
- 58, 80: BIT SYNCHRONIZATION SIGNAL
- 59, 81: FRAME SYNCRONIZATION SIGNAL
- 60, 82: CONTROL SIGNAL
- 70: SIMPLE ID
- 70: HEAD POSITION
- 71: RECEPTION CARRIER SENSING TIMING
- 83: LINK COUNTERPART ID
- 84: LOCAL STATION ID
- 85: LAYER 3 FRAME
- 86: CERTIFICATION CODE
- 87: ROUTE INFORMATION
- 88: LAYER 3 ID
- 89: APPLICATION DATA
- 90: RELAY WIRELESS APPARATUS INFORMATION
- 91: SLOT POSITION INFORMATION
- 101: MASTER WIRELESS APPARATUS
- 120: LOW-ORDER SLOT
- 121: HIGH-ORDER SLOT
- 201a - e: RELAY WIRELESS APPARATUS
- 301a - p: SLAVE WIRELESS APPARATUS
- 351: REGULAR BEACON SIGNAL
- 352: TEMPORARY BEACON SIGNAL
- 353: SIGNAL FOR ENTRY
- 354: FULL SEARCH MODE
- 355 - 358: REGULAR BEACON SEARCH MODE

## Claims

1. A wireless communication apparatus conducting communication between a high-order apparatus and a low-order apparatus, the wireless communication apparatus comprising:
a beacon reception unit receiving a first regular beacon signal transmitted from the high-order apparatus; and
a beacon transmission unit transmitting a second regular beacon signal synchronizing a clock of the low-order apparatus to the low-order apparatus in a case where the beacon reception unit receives the first regular beacon signal, and transmitting a temporary beacon signal indicating that a clock of the wireless communication apparatus is not able to be synchronized with a clock of the high-order apparatus, to the low-order apparatus, in a case where the beacon reception unit is not able to receive the first regular beacon signal.

2. The wireless communication apparatus of claim 1,
wherein the beacon transmission unit transmits the temporary beacon signal, based on the clock of the wireless communication apparatus, at a timing when the second regular beacon signal is transmitted.

3. The wireless communication apparatus of claim 1 or 2,
wherein the beacon reception unit repeats an operation of receiving the first regular beacon signal in a case where the beacon transmission unit transmits the temporary beacon signal to the low-order apparatus, the wireless communication apparatus further comprising:
a control unit searching a further high-order apparatus, different from the high-order apparatus, in a case where the beacon reception unit repeats the operation of receiving the first regular beacon signal, by a predetermined number of times, without receiving the first regular beacon signal.

4. A wireless communication apparatus conducting communication between a high-order apparatus and a low-order apparatus, the wireless communication apparatus comprising:
a beacon reception unit receiving a first regular beacon signal transmitted by the high-order apparatus and a temporary beacon signal indicating that a clock of the high-order apparatus is not able to be synchronized with a further high-order apparatus that is higher in order than the high-order apparatus;
a beacon transmission unit transmitting a second regular beacon signal synchronizing a clock of the low-order apparatus when the beacon reception unit receives the first regular beacon signal; and
a control unit searching the further high-order apparatus, different from the high-order apparatus, when the beacon reception unit repeats an operation of receiving the first regular beacon signal, by a predetermined number of times, without receiving the first regular beacon signal.

5. A wireless communication method of conducting communication between a high-order apparatus and a low-order apparatus, comprising:
a beacon reception step of receiving a first regular beacon signal transmitted from the high-order apparatus;
a step of transmitting a second regular beacon signal synchronizing a clock of the low-order apparatus to the low-order apparatus in a case where the first regular beacon signal is received in the beacon reception step; and
a beacon transmission step of transmitting a temporary beacon signal indicating that the clock of a local station is not able to be synchronized with a clock of the high-order apparatus, to the low-order apparatus, in a case where the first regular beacon signal is not able to be received in the beacon reception step.
